# EUROPÄISCHE PATENTANMELDUNG

(11) **EP 4 407 431 A1**
(43) Veröffentlichungstag der Anmeldung: **31.07.2024**
(21) Anmeldenummer: 23153138.5
(22) Anmeldetag: 24.01.2023
(51) Int. Cl.: G06F 3/12, H04N 21/41

(54) **VERFAHREN ZUM DRUCKEN EINES DOKUMENTS AUF EIN ELEKTRONISCHES PAPIER MIT EINEM VIRTUELLEN DRUCKER, UND VIRTUELLES DRUCKERSYSTEM**

(71) Anmelder: Ekko GmbH, 58456 Witten (DE)
(72) Erfinder: Falkewitz, Rouven, 58455 Witten (DE); Lehmann, Benny Philip, 58456 Witten (DE)
(74) Vertreter: Angerhausen, Christoph

(57) **Zusammenfassung**

Die Erfindung betrifft ein Verfahren zum Drucken eines Dokuments (2) auf ein elektronisches Papier (1) mit einem virtuellen Drucker (3), wobei das Verfahren die folgenden Schritte umfasst: Auswählen eines zu druckenden Dokuments (2); Erstellen eines Druckauftrags zum Drucken des zu druckenden Dokuments (2); Erstellen, basierend auf dem Druckauftrag, eines das zu druckende Dokument (2) repräsentierenden Datensatzes in einem von dem elektronischen Papier (1) interpretierbaren Format mit dem virtuellen Drucker (3); Übermitteln des Datensatzes an das elektronische Papier (1); und Anzeigen des zu druckenden Dokuments (2) auf dem elektronischen Papier (1) basierend auf dem übermittelten Datensatz, so dass das elektronische Papier (1) mit dem zu druckenden Dokument (2) durch den virtuellen Drucker (3) bedruckt ist, wobei bevorzugt der Druckauftrag eine Seitenbeschreibungssprache oder eine Druckersprache umfasst. Die Erfindung betrifft weiterhin ein virtuelles Druckersystem (100).

## Beschreibung

Die Erfindung betrifft ein Verfahren zum Drucken eines Dokuments auf ein elektronisches Papier mit einem virtuellen Drucker, und ein virtuelles Druckersystem.

Bei der Produktion oder Fertigung verschiedenster Güter werden Laufzettel bzw. Laufkarten, Sequenzzettel, Transportlisten, Begleitkarten oder dergleichen verwendet, um beispielsweise eine Reihenfolge von Montageschritten oder Fertigungsschritten einzuhalten. Die Zettel werden physisch auf Papier ausgedruckt, und dokumentieren, welche Arbeitsschritte ein Produkt bereits durchlaufen hat bzw. welche Arbeitsschritte dieses noch durchlaufen muss. Ist ein Arbeitsschritt erledigt, wird dies üblicherweise entweder auf dem Zettel notiert, oder ein neuer Zettel (physisch) ausgedruckt.

Ebenso werden beispielsweise in der Logistik Regale in der Sequenz befüllt, in der die Inhalte der Regale am Montageband verbaut werden müssen. Bei jedem dieser Regale liegt ein kurzlebiger Papierzettel bei, welcher angibt welches Material sich aktuell in dem Regal befindet. Die Papierzettel müssen entsprechend häufig oder zumindest regelmäßig angepasst oder geändert werden, wozu ein neuer Zettel physisch auf Papier ausgedruckt werden muss.

Diese (physischen) Aktualisierungen der Zettel erfordern einen vergleichsweisen hohen Aufwand. Zudem wird bei jeder Aktualisierung neues Druckerpapier benötigt.

Es ist deshalb die Aufgabe der vorliegenden Erfindung, diese Nachteile zu überwinden. Die vorliegende Erfindung ermöglicht ein einfaches, unkompliziertes, flexibles und ressourcenschonendes Drucken entsprechender Zettel. Die Erfindung muss aber nicht auf derartige Zettel begrenzt sein. Erfindungsgemäß ist vorgesehen, dieselben Dokumente nicht physisch auf Papier, sondern elektronisch auf elektronisches Papier zu drucken. Damit kann derselbe Druckauftrag wie beim physischen Drucken verwendet werden, so dass keine Anpassungen auf Anwenderseite notwendig sind. Das elektronische Papier kann mehrfach bedruckbar sein, so dass Aktualisierungen der Zettel einfach, schnell und ressourcenschonend erfolgen können. Geeignetes elektronisches Papier wird z.B. von SoluM oder PDi Digital vertrieben.

Die Aufgabe der Erfindung wird durch ein Verfahren nach Anspruch 1 sowie ein virtuelles Druckersystem nach Anspruch 9 gelöst. Die abhängigen Ansprüche betreffen jeweils vorteilhafte Ausführungsformen.

Ein erster Aspekt der Erfindung betrifft ein Verfahren zum Drucken eines Dokuments auf ein elektronisches Papier mit einem virtuellen Drucker, wobei das Verfahren die folgenden Schritte umfasst:
a) Auswählen eines zu druckenden Dokuments;
b) Erstellen eines Druckauftrags zum Drucken des zu druckenden Dokuments;
c) Erstellen, basierend auf dem Druckauftrag, eines das zu druckende Dokument repräsentierenden Datensatzes in einem von dem elektronischen Papier interpretierbaren Format mit dem virtuellen Drucker;
d) Übermitteln des Datensatzes an das elektronische Papier; und
e) Anzeigen des zu druckenden Dokuments auf dem elektronischen Papier basierend auf dem übermittelten Datensatz, so dass das elektronische Papier mit dem zu druckenden Dokument durch den virtuellen Drucker bedruckt ist.

Es kann vorgesehen sein, dass der Druckauftrag eine Seitenbeschreibungssprache oder eine Druckersprache umfassen kann. In einigen Ausführungsformen kann vorgesehen sein, dass beim Erstellen des Druckauftrags das Dokument in eine oder die Seitenbeschreibungssprache oder Druckersprache übersetzt und/oder umgewandelt sein oder werden kann. In einigen Ausführungsformen kann vorgesehen sein, dass beim Erstellen des Druckauftrags eine Datei in einer oder der Seitenbeschreibungssprache oder Druckersprache erstellt werden kann. Mit Bedrucken des elektronischen Papiers kann insbesondere gemeint sein, dass das Dokument auf dem elektronischen Papier angezeigt wird oder ist. Das elektronische Papier kann durch das Anzeigen des zu druckenden Dokuments mit dem zu druckenden Dokument durch den virtuellen Drucker bedruckt sein. Das elektronische Papier kann dadurch elektronisch bedruckt sein oder werden. Durch das Ausführen mindestens eines, mehrerer oder aller der Schritte a) - e), insbesondere der Schritte c) - e), kann das elektronische Papier durch den virtuellen Drucker bedruckt sein oder werden.

Der virtuelle Drucker kann damit entsprechend einem physischen Drucker ein Dokument drucken. Der virtuelle Drucker kann dazu eingerichtet sein, denselben Druckauftrag wie ein physischer Drucker zu empfangen und/oder zu verarbeiten. Wird beispielsweise der Druckauftrag an einen physischen Drucker, beispielsweise einen Tintenstrahldrucker oder Laserdrucker, übermittelt, so kann der physischen Drucker das Dokument auf ein physisches Papier drucken. Wird beispielsweise der Druckauftrag, z.B. derselbe Druckauftrag, an den virtuellen Drucker übermittelt, so kann das Dokument elektronisch auf das elektronische Papier gedruckt sein oder werden. Damit kann sich eine gute Flexibilität ergeben, da Anwender, Benutzer oder aber auch Computerprogramme, die ein Dokument drucken wollen, denselben Druckauftrag wie zum physischen Dokument verwenden können. Es kann damit ermöglicht werden, dass anwenderseitig keine Änderungen vorgenommen werden müssen, um das elektronische Papier zu bedrucken bzw. um elektronisch zu drucken, sondern dass alle dazu erforderlichen Schritte und Anpassungen durch den virtuellen Drucker durchgeführt werden. Dadurch, dass der virtuelle Drucker den Druckauftrag verarbeiten kann, ergibt sich ein einfaches und unkompliziertes Bedrucken des elektronischen Papiers.

Der das zu druckende Dokument repräsentierende Datensatz kann Ausdruck sein oder aufweisen. Der Ausdruck kann ein virtueller Ausdruck sein. Der Datensatz und/oder der Ausdruck kann eine Datei sein oder aufweisen. Das Dokument kann beispielsweise einen oder mehrere Texte und/oder eines oder mehrere Bilder oder Grafiken umfassen.

Das elektronische Papier kann ein geeignetes Display, beispielsweise ein e-Ink Display oder e-Paper Display, haben.

Das Verfahren kann ein computerimplementiertes Verfahren sein oder aufweisen. Mindestens einer, mehrere oder alle der Schritte des Verfahrens können zumindest teilweise oder vollständig computerimplementiert sein. Der virtuelle Drucker kann eine Computereinheit sein und/oder aufweisen. Alternativ oder zusätzlich kann vorgesehen sein, dass der virtuelle Drucker ein Teil einer Rechnereinheit sein kann. Der virtuelle Drucker, die Rechnereinheit und/oder die Computereinheit kann ein Desktop-PCs, eine Workstation, ein mobiles Gerät wie z.B. Laptop oder Smartphone, ein Server, ein integrierter Schaltkreis, ein Mikrocontroller oder dergleichen, sein oder aufweisen.

Der Druckauftrag kann ein Datenformat dvi (device independent file format), ps (PostScript), pdf (portable document format), xps (xml paper specification), svg (scalable vector graphics), und/oder pcl (printer command language) umfassen und/oder sein.

Der virtuelle Drucker kann bei und/oder nach dem Erstellen des Datensatzes ein Dithering durchführen. Je nach Art und/oder Typ des elektronischen Papiers können damit Graustufen auf dem elektronischen Papier angezeigt und/oder approximiert sein oder werden, und/oder gedruckt sein oder werden.

Der virtuelle Drucker kann im Wesentlichen einem Netzwerkdrucker entsprechen. Alternativ oder zusätzlich kann der virtuelle Drucker einen Netzwerkdrucker umfassen oder sein. Es kann vorgesehen sein, dass der Druckauftrag von einem Peripheriegeräten erstellt werden kann. Das Peripheriegerät kann mit einem oder dem virtuellen Drucker zum Datenaustausch verbunden sein. In einigen Ausführungsformen kann eines oder mehrere Peripheriegeräte vorgesehen sein. Es kann vorgesehen sein, dass eines oder mehrere Peripheriegeräte einen oder mehrere Druckaufträge, und/oder eines oder mehrere zu druckende Dokumente an den virtuellen Drucker übermitteln kann. Damit kann sich in einigen Ausführungsformen eine Netzwerkdruckerfunktionalität ergeben. Alternativ oder zusätzlich kann vorgesehen sein, dass der Druckauftrag von dem virtuellen Drucker erstellt werden kann. Sind mehr als ein virtueller Drucker vorgesehen, so kann jeder virtueller Drucker mit einem elektronischen Papier oder einer Mehrzahl mit dem elektronischen Papiere verbunden sein oder werden.

Das Peripheriegerät kann ein Computergerät sein oder aufweisen. Beispielsweise kann das Peripheriegerät ein Desktop-PC, eine Workstation, ein mobiles Gerät wie z.B. Laptop oder Smartphone, ein Server, ein integrierter Schaltkreis, ein Mikrocontroller oder dergleichen, sein oder aufweisen.

Beim Übermitteln des Datensatzes kann der Datensatz an eine Mehrzahl elektronischer Papiere übermittelt werden. Beim Anzeigen des zu druckenden Dokuments kann das zu druckende Dokument auf jedem der Mehrzahl elektronischer Papiere angezeigt werden. In einigen Ausführungsformen kann der Druckauftrag Informationen enthalten, auf welchem elektronischen Papier oder auf welchen elektronischen Papieren das Dokument gedruckt sein oder werden soll.

In einigen Ausführungsformen kann für jedes der Mehrzahl elektronischer Papiere ein separater Druckauftrag und/oder Datensatz erstellt werden. In einigen Ausführungsformen kann beim Übermitteln des Datensatzes an ein jeweiliges elektronisches Papier der Datensatz in einem von dem jeweiligen elektronischen Papier interpretierbaren Format übermittelt werden.

Das zu druckende Dokument kann eine Mehrzahl Seiten haben, wobei beim Anzeigen des zu druckenden Dokuments das elektronische Papier eine Seite der Mehrzahl Seiten anzeigen und in Reaktion auf einen Steuerbefehl die angezeigte Seite wechseln kann.

Beim Auswählen des zu druckenden Dokuments kann sich das zu druckende Dokument von einem bereits auf das elektronische Papier gedruckten Dokument unterscheiden, so dass das elektronische Papier nochmals bedruckt werden kann. Es kann alternativ oder zusätzlich allgemein vorgesehen sein, ein elektronisches Papier nochmals zu bedrucken und/oder zu "überdrucken". Dazu kann vorgesehen sein, das Verfahren nochmals durchzuführen und/oder zu wiederholen, in einigen Ausführungsformen mehrfach.

Ein weiterer Aspekt der Erfindung betrifft ein virtuelles Druckersystem, aufweisend mindestens ein elektronisches Papier und mindestens einen virtuellen Drucker, wobei das elektronische Papier mit dem virtuellen Drucker zum Datenaustausch verbunden ist, und wobei der virtuelle Drucker dazu eingerichtet ist, das elektronische Papier mit einem Verfahren nach einem vorstehend beschriebenen mit einem zu druckenden Dokument zu bedrucken.

Das virtuelle Druckersystem kann physische Komponenten, Einheiten und/oder Entitäten umfassen. Das virtuelle Druckersystem kann eine oder mehrere Computereinheiten oder dergleichen umfassen.

Das zu druckende Dokument kann ein Begleitschein, eine Laufkarte, eine Transportliste oder ein Sequenzprotokoll sein oder aufweisen. Prinzipiell ist das Verfahren und/oder das virtuelle Druckersystem aber geeignet, jegliche Art von Dokumenten zu drucken. Insbesondere kann das Verfahren und/oder das virtuelles Druckersystem dazu geeignet sein, jedes mit einem herkömmlichen Drucker physisch druckbare Dokument auf elektronisches Papier zu drucken.

Das elektronische Papier kann über narrowband-IOT mit dem virtuellen Drucker verbunden sein. Die Verbindung zwischen elektronische Papier und virtuellen Drucker ist aber nicht darauf beschränkt. Die Verbindung kann beispielsweise ein Low-power wide-area network bzw. ein entsprechendes Protokoll umfassen. Die Verbindung kann drahtlos sein. Die Verbindung kann Bluetooth, Zigbee, WLAN, LTE, GSM oder dergleichen, und/oder entsprechende Protokolle, umfassen. In einigen Ausführungsformen kann alternativ oder zusätzlich die Verbindung zwischen elektronischem Papier und virtuellen Drucker kabelgebunden sein.

Der virtuelle Drucker kann über narrowband-IOT mit einem oder mehreren Peripheriegeräten verbunden sein. Die Verbindung zwischen Peripheriegerät und virtuellen Drucker ist aber nicht darauf beschränkt. Die Verbindung kann beispielsweise ein Low-power wide-area network bzw. ein entsprechendes Protokoll umfassen. Die Verbindung kann drahtlos sein. Die Verbindung kann Bluetooth, Zigbee, WLAN, LTE, GSM oder dergleichen, und/oder entsprechende Protokolle, umfassen. In einigen Ausführungsformen kann alternativ oder zusätzlich die Verbindung zwischen Peripheriegerät und virtuellen Drucker kabelgebunden sein.

Das virtuelles Druckersystem kann eine Mehrzahl virtueller Drucker aufweisen, die mit dem mindestens einen elektronischen Papier zum Datenaustausch verbunden sein können. In einigen Ausführungsformen kann der Druckauftrag und/oder Datensatz von jedem der virtuellen Drucker erstellbar sein.

Das virtuelles Druckersystem kann mindestens ein Peripheriegerät aufweisen, wobei das Peripheriegerät mit dem virtuellen Drucker zum Datenaustausch verbunden sein kann. Das Peripheriegerät kann dazu eingerichtet sein, ein zu druckendes Dokument und/oder einen Druckauftrag an den virtuellen Drucker zu übermitteln.

Das virtuelles Druckersystem kann eine Druckerstation mit einem Bereitstellungsort zum Bereitstellen von elektronischem Papier aufweisen. Die Druckerstation kann eine Druckereinheit zum Bedrucken von an dem Bereitstellungsort bereitgestellten elektronischen Papier aufweisen, wobei die Druckereinheit mit dem virtuellen Drucker zum Datenaustausch verbunden sein kann.

An oder bei dem Bereitstellungsort kann eine Mehrzahl elektronischer Papiere zu einem Stapel übereinandergestapelt sein. Die Druckerstation kann dazu eingerichtet und/oder derart angeordnet sein, dass eines oder mehrere elektronische Papiere des Stapels bedruckbar sein kann.

Die Erfindung wird anhand der nachfolgenden Figuren weiter erläutert. Es zeigen:
- Fig. 1:: eine beispielshafte Ausführungsform eines erfindungsgemäßen virtuellen Druckersystems;
- Fig. 2:: eine weitere beispielshafte Ausführungsform eines erfindungsgemäßen virtuellen Druckersystems;
- Fig. 3:: ein unbedrucktes elektronisches Papier und ein bedrucktes elektronisches Papier;
- Fig. 4:: noch eine weitere beispielshafte Ausführungsform eines erfindungsgemäßen virtuellen Druckersystems; und
- Fig. 5:: noch eine andere beispielshafte Ausführungsform eines erfindungsgemäßen virtuellen Druckersystems.

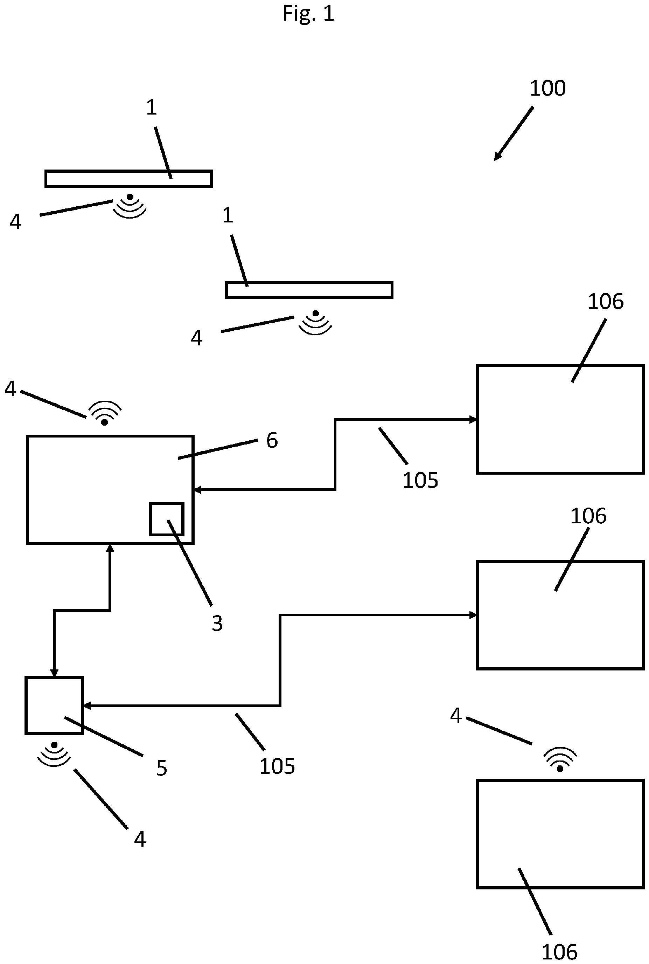

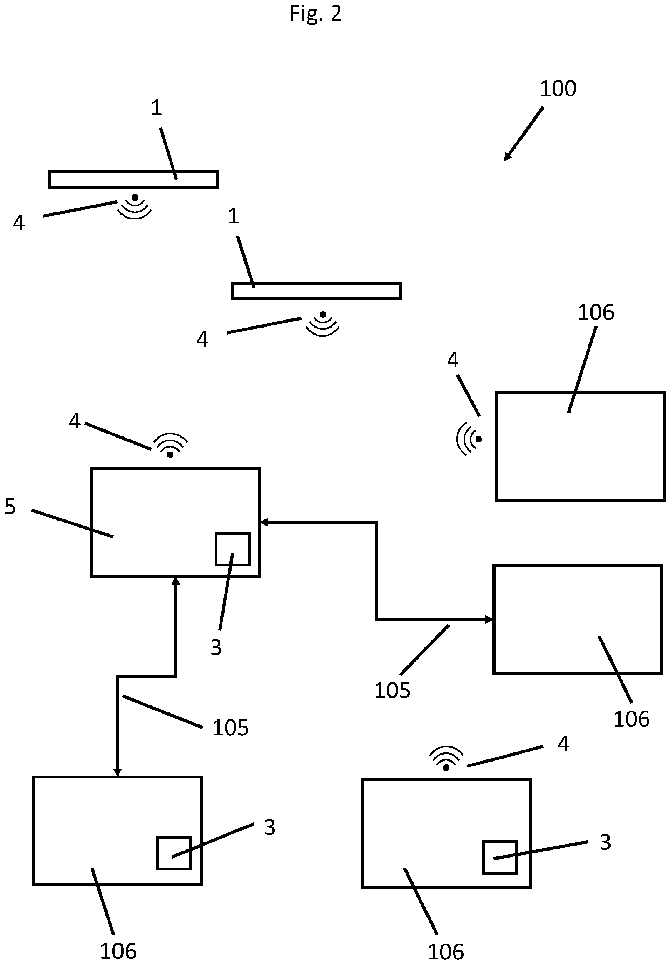

Figuren 1 und 2 zeigen beispielhafte Ausführungsformen eines erfindungsgemäßen virtuellen Druckersystems 100. Die in den Figuren 1 und/oder 2 gezeigten und/oder beschriebenen Ausführungsbeispiele können eines, mehrere oder alle Merkmale eines oder mehreren anderen gezeigten und/oder beschriebenen Ausführungsbeispiele haben. Das virtuelle Druckersystem 100 weist ein elektronisches Papier 1 und einen virtuellen Drucker 3 auf. In einigen Ausführungsformen kann das virtuelle Druckersystem 100 mehr als ein elektronisches Papier 1 und/oder mehr als einen virtuellen Drucker 3 aufweisen.

Der virtuelle Drucker 3 kann computerimplementiert sein. Der virtuelle Drucker 3 kann auf einem Computergerät 6, einer Kommunikationseinheit 5 und/oder einem Peripheriegerät 106 implementiert, eingerichtet und/oder installiert sein und/oder laufen. Der virtuelle Drucker 3 kann eine Instanz sein oder bilden. Das Computergerät 6 kann ein Server, beispielsweis ein Cloud-Server, sein oder aufweisen. Es kann vorgesehen sein, dass das Computergerät 6 on-premise bzw. vor Ort oder lokal aufgestellt und/oder angeordnet sein kann. Alternativ oder zusätzlich kann das Computergerät 6 ein Desktop-PCs, eine Workstation, ein mobiles Gerät wie z.B. Laptop oder Smartphone, ein Server, ein integrierter Schaltkreis, ein Mikrocontroller oder dergleichen, sein oder aufweisen. Der virtuelle Drucker 3 kann ein Netzwerkdrucker sein, einem Netzwerkdrucker entsprechen und/oder eine Funktion eines Netzwerkdruckers bereitstellen oder haben. Eines, mehrere oder alle aus Peripheriegerät 106, virtueller Drucker 3, Computergerät und/oder Kommunikationseinheit 5 können über eines oder mehrere Netzwerke verbunden sein.

Alternativ oder zusätzlich kann der virtuelle Drucker 3 eine Computereinheit sein oder aufweisen, z.B. ein oder das Computergerät 6. Der virtuelle Drucker 3 kann Teil einer Rechnereinheit sein. Der virtuelle Drucker 3, die Rechnereinheit und/oder die Computereinheit kann ein Desktop-PCs, eine Workstation, ein mobiles Gerät wie z.B. Laptop oder Smartphone, ein Server, ein integrierter Schaltkreis, ein Mikrocontroller oder dergleichen, sein oder aufweisen. Virtueller Drucker 3 und elektronisches Papier 1 können zum Datenaustausch miteinander verbunden sein, und/oder können Daten miteinander austauschen, beispielsweise über eine Kommunikationsschnittstelle und/oder Kommunikationseinheit 5. Beispielsweise kann eine Funkverbindung 4 zwischen virtuellem Drucker 3 und elektronischem Papier 1 vorgesehen sein.

Eine oder die Funkverbindung 4 kann eine drahtlose Verbindung sein oder aufweisen. Die Funkverbindung 4 kann narrowband-IoT (narrowband-Internet-of-Things), LTE, GSM, Bluetooth, Zigbee, WLAN oder dergleichen umfassen.

Der virtuelle Drucker 3 kann dazu eingerichtet sein, basierend auf einem Druckauftrag einen Datensatz zu erstellen, der von dem elektronischen Papier 1 interpretierbar ist und/oder ein von dem elektronischen Papier 1 interpretierbares Format hat. Der Druckauftrag kann ein Befehl sein, ein zu druckendes Dokument 2 auszudrucken. Der Druckauftrag kann eine Seitenbeschreibungssprache und/oder eine Druckersprache umfassen. Der Druckauftrag kann elektronisch und/oder als Datei und/oder Computerbefehl vorliegen und/oder solche umfassen.

Der Druckauftrag kann Informationen bezüglich des zu druckenden Dokuments 2 enthalten und/oder umfassen. Der Druckauftrag kann Informationen bezüglich der auszudruckenden Seiten des Dokuments 2, der Farbe, Größe und/oder Ausschnitte, Seitenformat, Seitenverhältnis, Zoom-Faktor wie Vergrößerungen oder Verkleinerungen, oder dergleichen umfassen. Der Druckauftrag kann Informationen enthalten und/oder spezifizieren, auf welches elektronische Papier 1 das Dokument 2 gedruckt werden soll. Es kann auch vorgesehen sein, das gleiche und/oder identische Dokument 2 auf mehr als einem elektronischen Papier 1 zu drucken. Der Druckauftrag kann dazu eingerichtet und/oder ausgeführt sein, dass ein physischer Drucker, z.B. ein Tintenstrahldrucker und/oder einen Laserdrucker, anhand des Druckauftrags das Dokument 2 auf ein physisches Papier drucken kann. In einigen Ausführungsformen kann der Druckauftrag Daten in dem Datenformat dvi (device independent file format) umfassen oder enthalten. Alternativ oder zusätzlich kann der Druckauftrag Daten in dem Datenformat ps (PostScript) umfassen oder enthalten. Alternativ oder zusätzlich kann der Druckauftrag Daten in dem Datenformat xps (xml paper specification) umfassen oder enthalten. Alternativ oder zusätzlich kann der Druckauftrag Daten in dem Datenformat svg (scalable vector graphics) umfassen oder enthalten. Alternativ oder zusätzlich kann der Druckauftrag Daten in dem Datenformat pcl (printer command language) umfassen oder enthalten.

Das interpretierbare Format kann ein geeignetes Datenformat sein und/oder aufweisen. Das elektronische Papier 1 ist dazu eingerichtet, dass, wenn der Datensatz in dem interpretierbaren Format an das elektronische Papier übermittelt ist oder wird, ein zu druckendes Dokument entsprechend dem Datensatz anzuzeigen. Damit kann das elektronische Papier 1 mit dem Dokument 2 bedruckt sein oder werden.

Ein erfindungsgemäßes Verfahren zum Drucken eines Dokuments 2 auf ein elektronisches Papier kann zunächst ein Auswählen eines zu druckenden Dokuments 2 umfassen. Das Auswählen des zu druckenden Dokuments 2 kann beispielsweise automatisch und/oder computergesteuert erfolgen. In einigen Ausführungsformen kann alternativ oder zusätzlich vorgesehen sein, dass ein Benutzer das zu druckende Dokument 2 auswählt und/oder auswählen kann. Für das zu druckende Dokument 2 kann dann ein Druckauftrag erstellt sein oder werden. In einigen Ausführungsformen kann das Auswählen des zu druckenden Dokuments 2 durch oder mit dem virtuellen Drucker 3 erfolgen. Der virtuelle Drucker 3 kann beispielsweise eine Computereinheit aufweisen, und/oder eine Rechnereinheit kann den virtuellen Drucker 3 aufweisen, so dass mit oder durch die Computereinheit und/oder die Rechnereinheit das zu druckende Dokument 2 ausgewählt sein oder werden kann. Alternativ oder zusätzlich kann eines oder mehrere Peripheriegerät 106 vorgesehen sein. Mit oder durch das Peripheriegerät 106 kann das zu druckende Dokument 2 ausgewählt sein oder werden.

Anschließend kann ein Druckauftrag erstellt sein oder werden. In einigen Ausführungsformen kann der Druckauftrag durch oder mit dem virtuellen Drucker 3, und/oder z.B. der Computereinheit und/oder der Rechnereinheit, erstellt sein oder werden. Alternativ oder zusätzlich kann vorgesehen sein, dass der Druckauftrag durch oder mit dem Peripheriegerät 106 erstellt sein oder werden kann. Ist der Druckauftrag durch oder mit dem Peripheriegerät 106 erstellt oder erstellt worden, so kann vorgesehen sein, den Druckauftrag an den virtuellen Drucker 3 zu übermitteln.

Der virtuelle Drucker 3 kann anschließend basierend und/oder anhand des Druckauftrags einen das zu druckende Dokument 2 repräsentierenden Datensatzes erstellen. Der Datensatz kann Steuerbefehle und/oder Informationen bezüglich des zu druckenden Dokuments 2 umfassen oder enthalten. Der Datensatz kann dazu eingerichtet und/oder derart ausgeführt sein, dass das elektronische Papier 1 anhand und/oder basierend auf dem Datensatz das Dokument 2 anzeigen kann.

Der erstellte Datensatz kann an das elektronische Papier 1 übermittelt sein oder werden. Beispielsweise kann der virtuelle Drucker 3 geeignete Übertragungsmittel aufweisen. Das elektronische Papier 1 kann anschließend das Dokument 2 anzeigen. Damit kann das elektronische Papier 1 durch und/oder mit dem virtuellen Drucker 3 bedruckt sein oder werden.

In anderen Worten kann vorgesehen sein, dass der virtuelle Drucker 3 eine einem physischen Drucker entsprechende Funktion haben kann. So kann der physische Drucker dazu eingerichtet sein, basierend auf dem Druckauftrag das Dokument 2 auf ein physisches Papier aufzudrucken, wohingegen der virtuelle Drucker 3 dazu eingerichtet sein kann, basierend auf demselben Druckauftrag das Dokument 2 elektronisch auf das elektronische Papier 1 zu druckenden. Damit kann eine hohe Flexibilität durch das virtuelle Druckersystem 100 bei gleichzeitig geringen Anpassungen erzielt sein, da derselbe Druckauftrag wie zum physischen Drucken verwendet werden kann. Durch das elektronische bzw. virtuelle Drucken mit dem virtuellen Drucker 3 bzw. dem virtuellen Druckersystem 100 kann das elektronische Papier 1 allerdings einfach und unkompliziert nochmals oder mehrfach bedruckt und/oder "überdruckt" sein oder werden, so dass beispielsweise Änderungen des Aufdrucks einfach und unkompliziert erfolgen können.

Es kann vorgesehen sein, dass der Druckauftrag mit oder durch eine Anwendersoftware erstellt sein oder werden kann. Die Anwendersoftware kann dazu eingerichtet sein und/oder verwendet werden, ein oder das zu druckende Dokument 2 zu öffnen und/oder zu laden. In einigen Ausführungsformen kann ein Benutzer ein zu druckendes Dokument 2 z.B. mit der Anwendersoftware auswählen, und dann mit einer Druckfunktion der Anwendersoftware den Druckauftrag erstellen. Beispielsweise können bei Verwendung der Druckfunktion und/oder durch die Druckfunktion mehrere Drucker auswählbar sein, von denen mindestens einer ein virtueller Drucker 3 sein kann. Es kann vorgesehen sein, dass mindestes einer der auswählbaren Drucker ein physischer Drucker sein kann. Durch Auswahl des Druckers kann ausgewählt sein oder werden, an welchen Drucker der Druckauftrag geschickt sein oder werden kann, oder werden soll. In einigen Ausführungsformen kann eine oder die Anwendersoftware alternativ oder zusätzlich automatisch und/oder selbstständig, z.B. anhand einer vorgegebenen Logik oder Programmierung, einen Drucker, z.B. einen oder den virtuellen Drucker 3, auswählen und/oder einen Druckauftrag erstellen.

Die Anwendersoftware kann auf einem oder dem Peripheriegerät 106 installiert sein und/oder laufen. Das Peripheriegerät 106 kann verwendet werden, um ein oder das zu druckende Dokument 2 auszuwählen.

Die Anwendersoftware kann beispielsweise ein Textverarbeitungsprogramm, ein Editor, ein Grafik- oder Zeichenprogramm, ein pdf-Viewer oder dergleichen und/oder ein Dateibetrachter sein oder umfassen. Die Anwendersoftware kann ein Programm sein oder aufweisen, das zum Drucken eines Dokuments und/oder einer Datei, einer Grafik oder Zeichnung, eines Modells, oder dergleichen geeignet und/oder eingerichtet sein kann.

In einigen Ausführungsformen kann das virtuelle Druckersystem 100 eines oder mehrere Peripheriegeräte 106 aufweisen. Peripheriegerät 106 kann mit dem virtuellen Drucker 3 zum Datenaustausch verbunden sein, und/oder kann Daten mit dem virtuellen Drucker 3 austauschen. In einigen Ausführungsformen kann einer oder der virtuelle Drucker 3 auf einem Computergerät 6 laufen und/oder eingerichtet, installiert und/oder implementiert sein. Ein oder das Peripheriegerät 106 kann mit dem Computergerät 6 über ein Kabel und/oder eine Kabelverbindung 105, und/oder eine Funkverbindung 4 verbunden sein und/oder Daten austauschen. Alternativ oder zusätzlich kann eine Kommunikationseinheit 5 vorgesehen sein, mit der ein oder das Peripheriegerät 106 über ein Kabel und/oder eine Kabelverbindung 105, und/oder eine Funkverbindung 4 verbunden sein und/oder Daten austauschen kann. In einigen Ausführungsformen kann die Kommunikationseinheit 5 und das Computergerät 6 zum Datenaustausch eingerichtet sein.

Es kann vorgesehen sein, dass die die Kommunikationseinheit 5 von einem Peripheriegerät empfangene Daten an das Computergerät 6 weiterleiten und/oder kommunizieren kann. Es kann vorgesehen sein, dass das Computergerät 6 die Kommunikationseinheit 5 aufweisen kann, und/oder dass die Kommunikationseinheit 5 Teil des Computergeräts 6 sein kann. Alternativ oder zusätzlich kann die die Kommunikationseinheit 5 ein Gateway sein oder aufweisen, und/oder als Gateway dienen. In einigen Ausführungsformen kann die Kommunikationseinheit 5über eine Kabelverbindung 105 mit dem Computergerät 6 verbunden sein, und/oder (nicht in den Figuren 1 und 2 gezeigt) über eine Funkverbindung mit dem Computergerät 6 verbunden sein.

Das Peripheriegerät 106 kann den Druckauftrag an die Kommunikationseinheit 5 und/oder das Computergerät 6 übermitteln. Der Druckauftrag kann Daten umfassen, und/oder aus Daten bestehen.

Es kann vorgesehen sein, dass die Kommunikationseinheit 5 mit einem elektronischen Papier 1, und/oder mehreren oder allen elektronischen Papieren 1 des Systems 100, zum Datenaustausch verbunden sein und/oder Daten austauschen kann. Die Kommunikationseinheit 5 kann z.B. über eine Funkverbindung 4 mit einem, mehreren oder allen elektronischen Papieren 1 verbunden sein. In einigen Ausführungsformen kann die Kommunikationsschnittstelle 5 dazu eingerichtet sein, den von einem oder dem virtuellen Drucker 3 erstellten Datensatz an eines, mehrere oder alle der elektronischen Papiere 1 zu übermitteln.

Die Kommunikationseinheit 5 kann einen von dem virtuellen Drucker 3, beispielsweise einem auf dem Computergerät 6 laufenden, implementierten, eingerichteten und/oder installierten virtuellen Drucker 4, erstellten Datensatz, z.B. einen das zu druckende Dokument 2 repräsentierenden Datensatz, empfangen und an eines oder mehrere elektronische Papier 1 kommunizieren. Alternativ oder zusätzlich kann das Computergerät 6 einen von dem auf dem Computergerät 6 laufenden, implementierten, eingerichteten und/oder installierten virtuellen Drucker 4, erstellten Datensatz, z.B. einen das zu druckende Dokument 2 repräsentierenden Datensatz, an eines oder mehrere elektronische Papiere 1 kommunizieren.

In einigen Ausführungsformen kann die Kommunikationsschnittstelle 5 dazu eingerichtet sein, einen oder den virtuellen Drucker 3 auszuführen, betreiben, und/oder zu verwenden. Es kann vorgesehen sein, dass einer oder der virtuelle Drucker 3 auf der Kommunikationseinheit 5 laufen kann, und/oder installiert, eingerichtet und/oder implementiert sein kann. In einigen Ausführungsformen kann in diesem Fall kein Computergerät 6 vorgesehen sein, und/oder das System 100 kein Computergerät 6 umfassen. Alternativ oder zusätzlich kann vorgesehen sein, dass ein virtueller Drucker 3 auf einem oder dem Computergerät 6 laufen kann, und/oder installiert, eingerichtet und/oder implementiert sein kann, und der virtuelle Drucker 3 und/oder ein weiterer virtueller Drucker 3 auf der Kommunikationseinheit 5 laufen kann, und/oder installiert, eingerichtet und/oder implementiert sein kann.

In einigen Ausführungsformen kann mindestens ein Peripheriegerät 106 über ein Kabel bzw. eine Kabelverbindung 105 mit dem virtuellen Drucker 3 verbunden sein oder werden. Alternativ oder zusätzlich kann vorgesehen sein, dass mindestens ein Peripheriegerät 106 drahtlos, z.B. über eine Funkverbindung 4, mit dem virtuellen Drucker 3 verbunden sein oder werden kann.

Eine Verbindung und/oder ein Datenaustausch mit einem oder dem virtuellen Drucker 3 kann umfassen, dass Daten mittelbar und/oder unmittelbar an den virtuellen Drucker 3 kommuniziert und/oder übermittelt sind oder werden, und/oder dass der virtuelle Drucker 3 auf die Daten zugreifen und/oder abrufen kann. Beispielsweise kann ein virtueller Drucker 3 mit einem Peripheriegerät 106 und/oder Kommunikationseinheit 5 verbunden sein, wenn Peripheriegerät 106 und/oder Kommunikationseinheit 5 Daten an ein Computergerät 6 übermitteln können, auf dem der virtuelle Drucker 3 läuft, und/oder eingerichtet, implementiert und/oder installiert ist, und der virtuelle Drucker 3 die übermittelten Daten abrufen, modifizieren und/oder verarbeiten kann, und/oder auf die Daten Zugriff hat.

Eine Verbindung und/oder ein Datenaustausch mit einem oder dem virtuellen Drucker 3 kann umfassen, dass Daten mittelbar und/oder unmittelbar von dem virtuellen Drucker 3 kommuniziert und/oder übermittelt sind oder werden, beispielsweise an ein Peripheriegerät 106, eine Kommunikationseinheit 5 und/oder eine Druckereinheit 102. Beispielsweise kann ein von einem virtuellen Drucker 3, beispielsweise einem auf einem Computergerät 6 laufenden eingerichteten, implementierten und/oder installierten virtuellen Drucker 3, erstellter Datensatz mit Hilfe der Computereinheit 6 und/oder einer geeigneten Schnittstelle an ein Peripheriegerät 106, eine Kommunikationseinheit 5 und/oder eine Druckereinheit 102 übermittelt sein oder werden.

Die Funkverbindung 4 kann narrowband-IoT (narrowband-Internet-of-Things), LTE, GSM, Bluetooth, Zigbee, WLAN oder dergleichen umfassen.

Das Peripheriegerät 106 kann ein Computergerät sein oder aufweisen. Beispielsweise kann das Peripheriegerät ein Desktop-PC, eine Workstation, ein mobiles Gerät wie z.B. Laptop oder Smartphone, ein Server, ein integrierter Schaltkreis, ein Mikrocontroller oder dergleichen, sein oder aufweisen.

In einigen Ausführungsformen kann alternativ oder zusätzlich ein Peripheriegerät 106 einen oder den virtuellen Drucker 3 aufweisen. Es kann vorgesehen sein, dass das Peripheriegerät 106 einen oder den virtuellen Drucker 3 ausführen, betreiben, und/oder verwenden kann. Es kann vorgesehen sein, dass einer oder der virtuelle Drucker 3 auf dem Peripheriegerät 106 laufen kann, und/oder installiert, eingerichtet und/oder implementiert sein kann. In einigen Ausführungsformen kann vorgesehen sein, dass das Peripheriegerät 106 einen das zu druckende Dokument 2 repräsentierenden Datensatz an eines, mehrere oder alle elektronische Papiere 1 übermitteln kann. In einigen Ausführungsformen kann Peripheriegerät 106 und elektronisches Papier 1 z.B. über eine Funkverbindung 4 miteinander verbunden sein.

Der virtuelle Drucker kann im Wesentlichen einem Netzwerkdrucker entsprechen, und/oder einen Netzwerkdrucker umfassen. Eines oder mehrere Peripheriegeräte 106 können mit dem virtuellen Drucker 3 verbunden sein oder werden, und/oder in Datenaustausch mit dem virtuellen Drucker 3 stehen und/oder zum Datenaustausch mit dem virtuellen Drucker 3 eingerichtet sein. Eines, mehrere oder jedes der Peripheriegeräte 106 kann beispielsweise einen Druckauftrag an den virtuellen Drucker 3 übermitteln, so dass das Dokument 2 auf eines oder mehrere elektronische Papiere 1 gedruckt sein oder werden kann.

Weist das virtuelle Druckersystem 100 elektronische Papiere 1 verschiedener Art und/oder Typ auf, so kann vorgesehen sein, dass sich die an die jeweiligen elektronischen Papier 1 jeweils übermittelten Datensätze unterscheiden. Die jeweiligen Datensätze können derart konfiguriert sein, dass sie von dem jeweiligen elektronischen Papier 1, an das sie übermittelt sein oder werden können, interpretiert sein oder werden können. In anderen Worten kann der virtuelle Drucker 3 in Abhängigkeit der jeweiligen elektronischen Papiere 1 jeweils derart konfigurierte Datensätze erstellen, dass die jeweiligen elektronischen Papiere 1 das Dokument 2 anzeigen können, mithin von dem virtuellen Drucker 3 bedruckbar sein können.

Ist ein elektronisches Papier 1 bedruckt, so kann vorgesehen sein, das elektronische Papier 1 nochmals mit demselben Dokument 2, einem veränderten Dokument 2 und/oder einem anderen Dokument 2 zu bedrucken. Ein bereits bedrucktes elektronisches Papier 1 kann "überdruckt" sein oder werden.

Das virtuelle Druckersystem 100 kann mehr als einen virtuellen Drucker 3 aufweisen. Es kann vorgesehen sein, dass mindestens zwei virtuelle Drucker 3 mit mindestens einem elektronischen Papier 1 verbunden sind und/oder Daten austauschen können. Es kann vorgesehen sein, dass mindestens zwei virtuelle Drucker 3 mit demselben elektronischen Papier 1 verbunden sind. In einigen Ausführungsformen kann jeder virtuelle Drucker 3 mit jedem elektronischen Papier 1 verbunden sein und/oder Daten austauschen. Es kann vorgesehen sein, dass mindestens zwei Peripheriegeräte 106 mit mindestens einem virtuellen Drucker 3 verbunden sind. Es kann vorgesehen sein, dass mindestens zwei Peripheriegeräte 106 mit demselben virtuellen Drucker 3 verbunden sind. In einigen Ausführungsformen kann ein virtueller Drucker von jedem mit ihm verbundenen Peripheriegerät 106 einen Druckauftrag und/oder ein zu druckendes Dokument 2 empfangen. In einigen Ausführungsformen kann ein elektronisches Papier 1 von jedem mit ihm verbundenen Peripheriegerät 106 einen Datensatz empfangen.

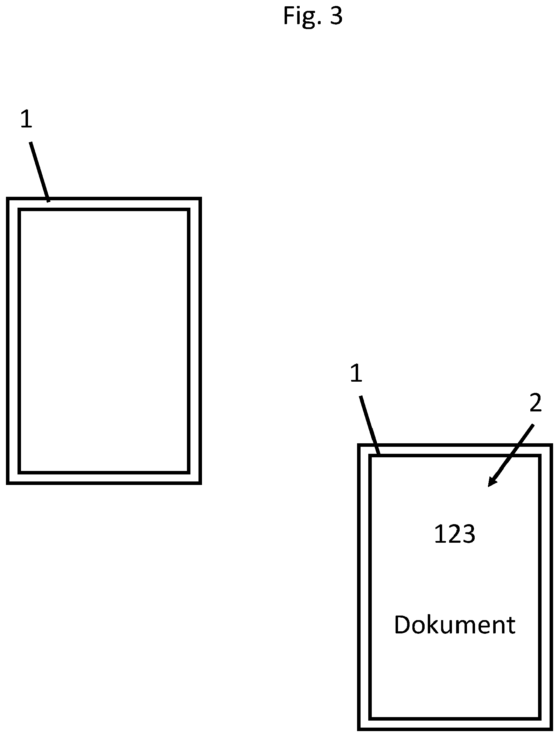

Figur 3 zeigt beispielhaft ein ungedrucktes elektronisches Papier 1 (links) sowie ein mit einem Dokument 2 bedrucktes elektronisches Papier 1 (rechts). Das elektronische Papier 1 kann ein geeignetes Display, beispielsweise ein e-Ink Display oder e-Paper Display, haben.

In einigen Ausführungsformen kann das Dokument 2 mehr als eine Seite aufweisen. Je nach Ausgestaltung des elektronischen Papiers 1 kann das elektronische Papier 1 dazu eingerichtet sein, mehr als eine Seite des Dokuments 2 anzuzeigen. In einigen Ausführungsformen kann alternativ oder zusätzlich vorgesehen sein, dass das elektronische Papier 1 mindestens eine Seite anzeigt, und mindestens eine andere Seite nicht angezeigt ist oder wird. In einigen Ausführungsformen kann das elektronische Papier 1 dazu eingerichtet sein, mindestens eine der angezeigten Seiten zu wechseln. Beispielsweise kann einen Steuerbefehl an das elektronische Papier 1 kommuniziert sein oder werden, auf den hin das elektronische Papier 1 mindestens eine der angezeigten Seiten wechseln kann. Es kann vorgesehen sein, dass durch das Wechseln der Seiten durch das Dokument 2 geblättert sein oder werden kann.

In einigen Ausführungsformen kann das elektronische Papier 1 eines oder mehrere Eingabefelder, Touch-Displays, Tasten und/oder Knöpfe oder dergleichen aufweisen, über die ein Benutzer entsprechende Steuerbefehle an das elektronische Papier 1 kommunizieren kann. Alternativ oder zusätzlich kann ein entsprechender Steuerbefehl durch ein Computergerät, beispielsweise virtuellen Drucker 3, Rechnereinheit, Peripheriegerät 106, und/oder dergleichen an das elektronische Papier 1 kommuniziert sein oder werden.

In einigen Ausführungsformen kann der virtuelle Drucker 3 bei und/oder nach dem Erstellen des Datensatzes ein Dithering durchführen. Je nach Art und/oder Type des elektronischen Papiers 1 kann dieses einen bestimmten Satz an Farben darstellen, in einigen Fällen ausschließlich einen bestimmten Satz an Farben darstellen. Dabei sind für einige elektronische Papiere 1 insbesondere Graustufen oft nicht eingeschlossen. Durch das Dithering können insbesondere Graustufen z.B. durch die Farben Schwarz und Weiss approximiert werden. Das ausgedruckte Dokument 2 kann durch das Dithering einen dem Originaldokument ähnlichen visuellen Eindruck hervorrufen. Das Dithering kann in einigen Ausführungsformen vor dem übermitteln des Datensatzes an das elektronische Papier 1 durchgeführt sein oder werden. In einigen Ausführungsformen kann das Dithering in dem Datensatz enthalten sein, und/oder der Datensatz das Dithering umfassen.

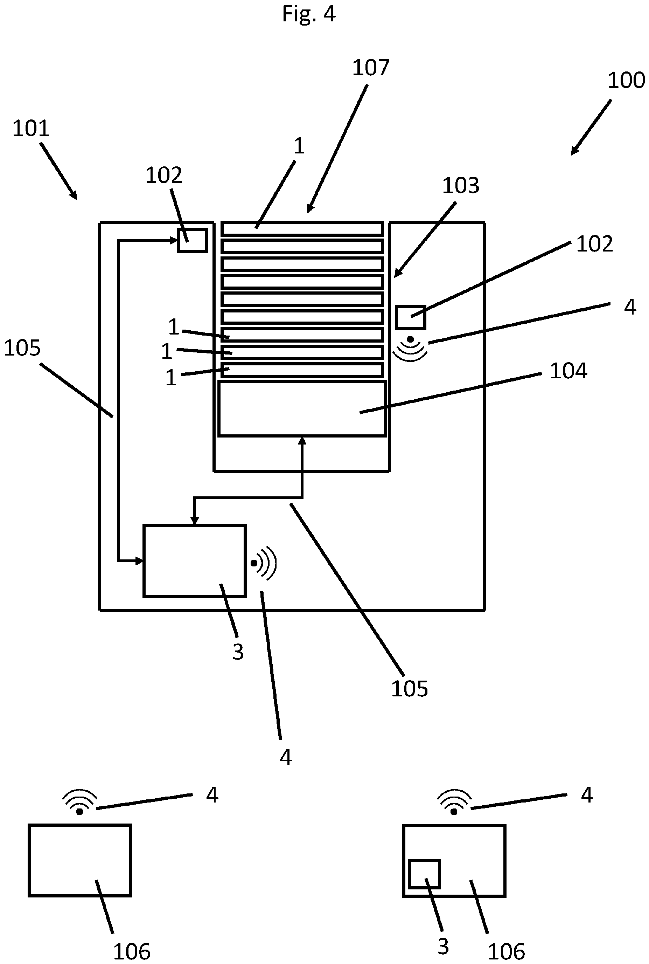

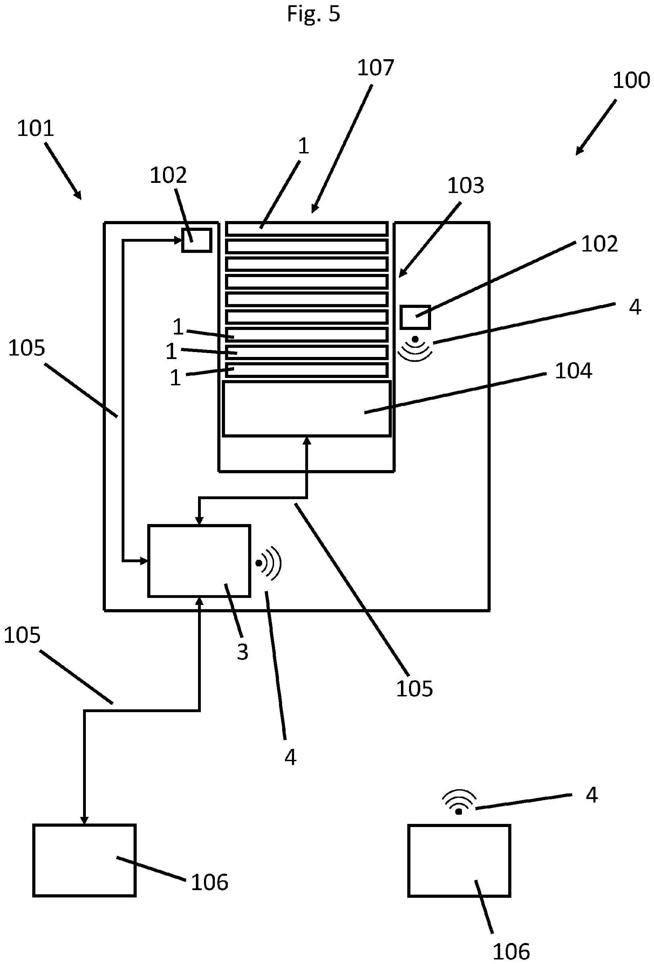

Figuren 4 und 5 zeigen weiterer beispielhafter Ausführungsformen eines erfindungsgemäßen virtuellen Druckersystems 100. Die in den Figuren 4 und 5 gezeigten und/oder beschriebenen Ausführungsbeispiele können eines, mehrere oder alle Merkmale eines oder mehreren anderen gezeigten und/oder beschriebenen Ausführungsbeispiele haben. Das virtuelle Druckersystem 100 kann eine Druckerstation 101 aufweisen. Die Druckerstation 101 kann dazu eingerichtet sein, elektronisches Papier 1 bereitzustellen und/oder zu bedrucken. In einigen Ausführungsformen kann das elektronische Papier 1 zu einem Stapel 103 übereinandergestapelt sein. Die Druckerstation 101 kann einen virtuellen Drucker 3 aufweisen. Die Druckerstation 101 kann beispielsweise eine (nicht in Figur 4 und 5) gezeigte Computereinheit aufweisen, die den virtuelle Drucker 3 ausführen kann, und/oder in oder mit der der virtuelle Drucker 3 implementiert, eingerichtet und/oder installiert sein kann, und/oder laufen kann. Der virtuelle Drucker 3 kann eine Instanz sein oder bilden, die von der Computereinheit ausgeführt sein kann und/oder auf der Computereinheit laufen kann. In einigen Ausführungsformen kann die Computereinheit eines, mehrere oder alle oben beschriebenen Merkmale und/oder Vorteile des Computergeräts 6 haben, und/oder ein oben beschriebenes Computergerät 6 sein oder aufweisen. Alternativ oder zusätzlich kann vorgesehen sein, dass ein oder der virtuelle Drucker 3 mit der Druckerstation 101 Daten austauschen kann, beispielsweise über eine Funkverbindung 4 und/oder eine (nicht in den Figuren gezeigte) Kabelverbindung 105. Die Funkverbindung 4 kann eine drahtlose Verbindung sein oder aufweisen, und/oder narrowband-IoT (narrowband-Internet-of-Things), LTE, GSM, Bluetooth, Zigbee, WLAN oder dergleichen umfassen.

Die Druckerstation 101 kann eine Druckereinheit 102 aufweisen. Die Druckereinheit 102 kann mit dem virtuellen Drucker 3 zum Datenaustausch verbunden sein oder werden, und/oder Daten austauschen, beispielsweise über eine Funkverbindung 4 und/oder eine Kabelverbindung 105. Die Funkverbindung 4 kann eine drahtlose Verbindung sein oder aufweisen, und/oder narrowband-IoT (narrowband-Internet-of-Things), LTE, GSM, Bluetooth, Zigbee, WLAN oder dergleichen umfassen. Die Druckereinheit 102 kann dazu eingerichtet sein, einen oder den von dem virtuellen Drucker 3 erstellten Datensatz an eines oder mehrere elektronische Papiere 1 zu übermitteln. In einigen Ausführungsformen kann ein virtuelle Drucker 3, beispielsweise einer oder der virtuelle Drucker 3 der Druckerstation 101, die Druckereinheit 102 aufweisen, und/oder die Druckereinheit 102 ein Teil eines oder des virtuellen Druckers 3 sein.

In einigen Ausführungsformen kann alternativ oder zusätzlich ein oder das Peripheriegerät 106 einen virtuellen Drucker 3 aufweisen, und/oder ein oder der virtuelle Drucker 3 auf dem Peripheriegerät 106 installiert, implementiert und/oder eingerichtet sein, und/oder laufen. Das Peripheriegerät 106 kann einen von dem virtuellen Drucker 3 erstellten Datensatz an die Druckerstation 101 und/oder die Druckereinheit 102 aufweisen. Es kann vorgesehen sein, dass die Druckerstation 101 eine entsprechende Kommunikationsschnittstelle zum Datenaustausch mit dem Peripheriegerät 106 und/oder einer (nicht in den Figuren gezeigten) Kommunikationsgerät aufweisen kann.

Die Druckereinheit 102 kann den Datensatz drahtlos an das elektronische Papier 1 übermitteln, beispielsweise über eine Funkverbindung 4. Die Funkverbindung 4 kann narrowband-IoT (narrowband-Internet-of-Things), LTE, GSM, Bluetooth, Zigbee, WLAN oder dergleichen umfassen. Die Druckereinheit 102 kann dazu geeignet in oder an der Druckerstation 101 angeordnet sein. Ist beispielsweise eine Mehrzahl elektronischer Papiere 1 zu einem Stapel 103 übereinandergestapelt, so kann die Druckereinheit 102 derart angeordnet sein, dass sie mit einem, mehreren oder allen elektronischen Papieren 1 des Stapels 103 Daten austauschen kann. In einigen Ausführungsformen kann vorgesehen sein, dass das oberste elektronische Papier 1 des Stapels 103 bedruckt sein oder werden kann. Eines oder mehrere der elektronischen Papiere 1 kann an einem Bereitstellungsort 107 der Druckerstation 101 bereitgestellt sein oder werden. In einigen Ausführungsformen, beispielsweise wenn mehrere elektronische Papiere 1 zu einem Stapel 103 gestapelt sind, kann der Bereitstellungsort 107 der Position des obersten elektronischen Papiers 1 in dem Stapel 103 entsprechen. Ist z.B. das oberste elektronische Papier 1 des Stapels 103 bedruckt, z.B. von dem virtuellen Drucker 3 und/oder der Druckereinheit 102, so kann das bedruckt elektronische Papier 1 an dem Bereitstellungsort 107 entnommen sein oder werden. In einigen Ausführungsformen kann die Druckereinheit 102 einen, mehrere oder alle Merkmale und/oder Vorteile einer oben beschriebenen Kommunikationseinheit 5 aufweisen, und/oder eine oben beschriebenes Kommunikationseinheit 5 sein oder aufweisen.

In einigen Ausführungsformen kann die Druckerstation 101 eine Ausgebevorrichtung 104 aufweisen. Die Ausgebevorrichtung 104 kann beispielsweise dazu eingerichtet sein, ein bedrucktes elektronisches Papier 1 auszugeben. In einigen Ausführungsformen kann vorgesehen sein, dass die Ausgebevorrichtung 104 bei oder nach dem Bedrucken eines elektronischen Papiers 1, insbesondere z.B. eines obersten elektronischen Papiers 1 des Stapels 103, und/der bei oder nach einem Entnehmen des bedruckten elektronischen Papiers 1, den Stapel 103 in Richtung Bereitstellungsort 107 verfahren und/oder bewegen kann. Damit kann z.B. nach dem entnehmen eines bedruckten elektronischen Papiers 1 ein weiteres elektronisches Papier 1 an den Bereitstellungsort 107 verfahren und/oder bewegt sein oder werden. Das weitere elektronische Papier 1 kann bereits bedruckt sein, in einigen Ausführungsformen aber auch unbedruckt und/oder noch nicht bedruckt sein. Ist das elektronische Papier 1 an dem Bereitstellungsort 107 unbedruckt und/oder noch nicht bedruckt, so kann vorgesehen sein, dass elektronische Papier 1 an dem Bereitstellens 107 zu bedrucken.

In einigen Ausführungsformen kann vorgesehen sein, dass der virtuelle Drucker 3 und/oder die Druckeinheit 102 das elektronische Papier 1 vor, bei und/oder nach dem Bedrucken, beispielsweise vor, bei und/oder nach dem Übermitteln des Datensatzes und/oder dem Anzeigen des Dokuments, mit Strom versorgt und/oder versorgen kann. Die Versorgung mit Strom kann beispielsweise über NFC erfolgen. Elektronisches Papier 1., virtueller Drucker 3 und/oder Druckeinheit 102 können entsprechend eingerichtet sein. Damit kann vorgesehen sein, dass das virtuelle Papier 1 keine eigene Stromversorgung aufweisen kann und/oder muss, beispielsweise keine Batterie und/oder keinen Akkumulator hat oder haben muss. Das elektronische Display 1 kann dazu eingerichtet sein, nur beim Ändern des angezeigten Dokuments 2 und/oder beim erstmaligen Anzeigen eines Dokuments 2 Strom zu verbrauchen. Es kann vorgesehen sein, dass das elektronische Display 1 keinen Strom verbraucht, wenn es ein Dokument 2 anzeigt.

In einigen Ausführungsformen kann vorgesehen sein, dass ein elektronisches Papier 1 nach Verwendung wieder in die Druckerstation 101 zurückgeführt werden kann, um wiederum in oder von der Druckstation 101 bedruckt zu sein oder werden. In einigen Ausführungsformen kann die Druckerstation 101 eine geeignete Aufnahme aufweisen.

Die in der Beschreibung, den Figuren und/oder den Ansprüchen offenbarten Merkmale können einzeln oder in beliebiger Kombination für die Verwirklichung der Erfindung wesentlich sein.

### Bezugszeichenliste

- 1: elektronisches Papier
- 2: Dokument
- 3: virtueller Drucker
- 4: Funkverbindung
- 5: Kommunikationseinheit
- 6: Computergerät
- 100: System
- 101: Druckerstation
- 102: Druckereinheit
- 103: Stapel
- 104: Ausgebevorrichtung
- 105: Kabelverbindung
- 106: Peripheriegerät
- 107: Bereitstellungsort

## Patentansprüche

1. Verfahren zum Drucken eines Dokuments (2) auf ein elektronisches Papier (1) mit einem virtuellen Drucker (3), wobei das Verfahren die folgenden Schritte umfasst:
a) Auswählen eines zu druckenden Dokuments (2);
b) Erstellen eines Druckauftrags zum Drucken des zu druckenden Dokuments (2);
c) Erstellen, basierend auf dem Druckauftrag, eines das zu druckende Dokument (2) repräsentierenden Datensatzes in einem von dem elektronischen Papier (1) interpretierbaren Format mit dem virtuellen Drucker (3);
d) Übermitteln des Datensatzes an das elektronische Papier (1); und
e) Anzeigen des zu druckenden Dokuments (2) auf dem elektronischen Papier (1) basierend auf dem übermittelten Datensatz, so dass das elektronische Papier (1) mit dem zu druckenden Dokument (2) durch den virtuellen Drucker (3) bedruckt ist,
wobei bevorzugt der Druckauftrag eine Seitenbeschreibungssprache oder eine Druckersprache umfasst.

2. Verfahren nach Anspruch 1, wobei der Druckauftrag ein Datenformat dvi, ps, pdf, xps, svg, und/oder pcl umfasst.

3. Verfahren nach Anspruch 1 oder 2, bei dem der virtuelle Drucker (3) bei und/oder nach dem Erstellen des Datensatzes ein Dithering durchführt.

4. Verfahren nach einem der vorangegangenen Ansprüche, bei dem der virtuelle Drucker (3) im Wesentlichen einem Netzwerkdrucker entspricht und/oder einen Netzwerkdrucker umfasst, wobei bevorzugt der Druckauftrag von einem mit dem virtuellen Drucker (3) zum Datenaustausch verbundenen Peripheriegerät (106) erstellt wird und an den virtuellen Drucker (3) übermittelt wird.

5. Verfahren nach einem der vorangegangenen Ansprüche, bei dem beim Übermitteln des Datensatzes der Datensatz an eine Mehrzahl elektronischer Papiere (1) übermittelt wird, und bei dem beim Anzeigen des zu druckenden Dokuments (2) das zu druckende Dokument (2) auf jedem der Mehrzahl elektronischer Papiere (1) angezeigt wird.

6. Verfahren nach Anspruch 5, bei dem für jedes der Mehrzahl elektronischer Papiere (1) ein separater Druckauftrag und/der Datensatz erstellt wird, und beim Übermitteln des Datensatzes an ein jeweiliges elektronisches Papier (1) das Dokument (2) in einem von dem jeweiligen elektronischen Papier (1) interpretierbaren Format übermittelt wird.

7. Verfahren nach einem der vorangegangenen Ansprüche, bei dem das zu druckende Dokument (2) eine Mehrzahl Seiten hat, wobei beim Anzeigen des zu druckenden Dokuments (2) das elektronische Papier (1) eine Seite der Mehrzahl Seiten anzeigt und in Reaktion auf einen Steuerbefehl die angezeigte Seite wechselt.

8. Verfahren nach einem der vorangegangenen Ansprüche, wobei beim Auswählen des zu druckenden Dokuments (2) das zu druckende Dokument (2) sich von einem bereits auf das elektronische Papier (1) gedruckten Dokument (2) unterscheidet, so dass das elektronische Papier (1) nochmals bedruckt wird.

9. Virtuelles Druckersystem (100), aufweisend mindestens ein elektronisches Papier (1) und mindestens einen virtuellen Drucker (3), wobei das elektronische Papier (1) mit dem virtuellen Drucker (3) zum Datenaustausch verbunden ist, und wobei der virtuelle Drucker (3) dazu eingerichtet ist, das elektronische Papier (1) mit einem Verfahren nach einem der vorangegangenen Ansprüche 1 bis 8 mit einem zu druckenden Dokument (2) zu bedrucken.

10. Virtuelles Druckersystem (100) nach Anspruch 9, wobei das zu druckende Dokument (2) ein Begleitschein, eine Laufkarte, eine Transportliste oder ein Sequenzprotokoll ist oder aufweist.

11. Virtuelles Druckersystem (100) nach einem der vorangegangenen Ansprüche 9 bis 10, wobei das elektronische Papier (1) über narrowband-IOT mit dem virtuellen Drucker (3) verbunden ist.

12. Virtuelles Druckersystem (100) nach einem der vorangegangenen Ansprüche 9 bis 11, das eine Mehrzahl virtueller Drucker (3) aufweist, die mit dem mindestens einen elektronischen Papier (1) zum Datenaustausch verbunden sind.

13. Virtuelles Druckersystem (100) nach einem der vorangegangenen Ansprüche 9 bis 12, das mindestens ein Peripheriegerät (106) aufweist, wobei das Peripheriegerät (106) mit dem virtuellen Drucker (3) zum Datenaustausch verbunden ist, wobei das Peripheriegerät (106) dazu eingerichtet ist, ein zu druckendes Dokument (2) und/oder einen Druckauftrag an den virtuellen Drucker (3) zu übermitteln.

14. Virtuelles Druckersystem (100) nach einem der vorangegangenen Ansprüche 9 bis 13, das eine Druckerstation (101) mit einem Bereitstellungsort (107) zum Bereitstellen von elektronischem Papier (1) aufweist, wobei die Druckerstation (101) eine Druckereinheit (102) zum Bedrucken von an dem Bereitstellungsort (107) bereitgestellten elektronischen Papier (1) aufweist, wobei die Druckereinheit (102) mit dem virtuellen Drucker (3) zum Datenaustausch verbunden ist.

15. Virtuelles Druckersystem (100) nach Anspruch 14, wobei an oder bei dem Bereitstellungsort (107) eine Mehrzahl elektronischer Papiere (1) zu einem Stapel (103) übereinandergestapelt sind und die Druckerstation (101) dazu eingerichtet und/oder derart angeordnet ist, dass eines oder mehrere elektronische Papiere (1) des Stapels (103) bedruckbar ist.

## Geänderte Patentansprüche

### Geänderte Patentansprüche gemäss Regel 137(2) EPÜ.

1. Verfahren zum Drucken eines Dokuments (2) auf ein elektronisches Papier (1) mit einer Druckerstation (101) mit einem virtuellen Drucker (3), wobei das Verfahren die folgenden Schritte umfasst:
a) Auswählen eines zu druckenden Dokuments (2);
b) Erstellen eines Druckauftrags zum Drucken des zu druckenden Dokuments (2);
c) Erstellen, basierend auf dem Druckauftrag, eines das zu druckende Dokument (2) repräsentierenden Datensatzes in einem von dem elektronischen Papier (1) interpretierbaren Format mit dem virtuellen Drucker (3);
d) Übermitteln des Datensatzes an das elektronische Papier (1) mit einer Druckereinheit (102) der Druckerstation (101), wobei die Druckereinheit (102) mit dem virtuellen Drucker (3) zum Datenaustausch verbunden ist, und wobei das elektronische Papier (1) an einem Bereitstellungsort (107) der Druckerstation (101) bereitgestellt ist; und
e) Anzeigen des zu druckenden Dokuments (2) auf dem elektronischen Papier (1) basierend auf dem übermittelten Datensatz, so dass das elektronische Papier (1) mit dem zu druckenden Dokument (2) durch den virtuellen Drucker (3) an dem Bereitstellungsort (107) bedruckt ist,
wobei bevorzugt der Druckauftrag eine Seitenbeschreibungssprache oder eine Druckersprache umfasst.

2. Verfahren nach Anspruch 1, wobei der Druckauftrag ein Datenformat dvi, ps, pdf, xps, svg, und/oder pcl umfasst.

3. Verfahren nach Anspruch 1 oder 2, bei dem der virtuelle Drucker (3) bei und/oder nach dem Erstellen des Datensatzes ein Dithering durchführt.

4. Verfahren nach einem der vorangegangenen Ansprüche, bei dem der virtuelle Drucker (3) im Wesentlichen einem Netzwerkdrucker entspricht und/oder einen Netzwerkdrucker umfasst, wobei bevorzugt der Druckauftrag von einem mit dem virtuellen Drucker (3) zum Datenaustausch verbundenen Peripheriegerät (106) erstellt wird und an den virtuellen Drucker (3) übermittelt wird.

5. Verfahren nach einem der vorangegangenen Ansprüche, bei dem beim Übermitteln des Datensatzes der Datensatz an eine Mehrzahl elektronischer Papiere (1) übermittelt wird, und bei dem beim Anzeigen des zu druckenden Dokuments (2) das zu druckende Dokument (2) auf jedem der Mehrzahl elektronischer Papiere (1) angezeigt wird.

6. Verfahren nach Anspruch 5, bei dem für jedes der Mehrzahl elektronischer Papiere (1) ein separater Druckauftrag und/der Datensatz erstellt wird, und beim Übermitteln des Datensatzes an ein jeweiliges elektronisches Papier (1) das Dokument (2) in einem von dem jeweiligen elektronischen Papier (1) interpretierbaren Format übermittelt wird.

7. Verfahren nach einem der vorangegangenen Ansprüche, bei dem das zu druckende Dokument (2) eine Mehrzahl Seiten hat, wobei beim Anzeigen des zu druckenden Dokuments (2) das elektronische Papier (1) eine Seite der Mehrzahl Seiten anzeigt und in Reaktion auf einen Steuerbefehl die angezeigte Seite wechselt.

8. Verfahren nach einem der vorangegangenen Ansprüche, wobei beim Auswählen des zu druckenden Dokuments (2) das zu druckende Dokument (2) sich von einem bereits auf das elektronische Papier (1) gedruckten Dokument (2) unterscheidet, so dass das elektronische Papier (1) nochmals bedruckt wird.

9. Virtuelles Druckersystem (100), aufweisend mindestens ein elektronisches Papier (1) und mindestens einen virtuellen Drucker (3), wobei das elektronische Papier (1) mit dem virtuellen Drucker (3) zum Datenaustausch verbunden ist, und wobei der virtuelle Drucker (3) dazu eingerichtet ist, das elektronische Papier (1) mit einem Verfahren nach einem der vorangegangenen Ansprüche 1 bis 8 mit einem zu druckenden Dokument (2) zu bedrucken, wobei das virtuelle Druckersystem (100) eine Druckerstation (101) mit einem Bereitstellungsort (107) zum Bereitstellen von elektronischem Papier (1) aufweist, wobei die Druckerstation (101) eine Druckereinheit (102) zum Bedrucken von an dem Bereitstellungsort (107) bereitgestellten elektronischen Papier (1) aufweist, wobei die Druckereinheit (102) mit dem virtuellen Drucker (3) zum Datenaustausch verbunden ist.

10. Virtuelles Druckersystem (100) nach Anspruch 9, wobei das zu druckende Dokument (2) ein Begleitschein, eine Laufkarte, eine Transportliste oder ein Sequenzprotokoll ist oder aufweist.

11. Virtuelles Druckersystem (100) nach einem der vorangegangenen Ansprüche 9 bis 10, wobei das elektronische Papier (1) über narrowband-IOT mit dem virtuellen Drucker (3) verbunden ist.

12. Virtuelles Druckersystem (100) nach einem der vorangegangenen Ansprüche 9 bis 11, das eine Mehrzahl virtueller Drucker (3) aufweist, die mit dem mindestens einen elektronischen Papier (1) zum Datenaustausch verbunden sind.

13. Virtuelles Druckersystem (100) nach einem der vorangegangenen Ansprüche 9 bis 12, das mindestens ein Peripheriegerät (106) aufweist, wobei das Peripheriegerät (106) mit dem virtuellen Drucker (3) zum Datenaustausch verbunden ist, wobei das Peripheriegerät (106) dazu eingerichtet ist, ein zu druckendes Dokument (2) und/oder einen Druckauftrag an den virtuellen Drucker (3) zu übermitteln.

14. Virtuelles Druckersystem (100) nach einem der vorangegangenen Ansprüche 9 bis 13, wobei an oder bei dem Bereitstellungsort (107) eine Mehrzahl elektronischer Papiere (1) zu einem Stapel (103) übereinandergestapelt sind und die Druckerstation (101) dazu eingerichtet und/oder derart angeordnet ist, dass eines oder mehrere elektronische Papiere (1) des Stapels (103) bedruckbar ist.

15. Virtuelles Druckersystem (100) nach einem der vorangegangenen Ansprüche 9 bis 14, bei dem die Druckerstation (101) eine Ausgabevorrichtung (104) aufweist, die dazu eingerichtet ist, ein bedrucktes elektronisches Papier (1) auszugeben.
